(19) **Europäisches Patentamt**
**European Patent Office**
**Office européen des brevets**

(11) **EP 4 684 902 A1**

(12) **EUROPÄISCHE PATENTANMELDUNG**

(43) Veröffentlichungstag:
28.01.2026 Patentblatt 2026/05

(21) Anmeldenummer: 25190790.3

(22) Anmeldetag: 21.07.2025

(51) Internationale Patentklassifikation (IPC):
$B23K\ 26/046^{(2014.01)}$      $B23K\ 26/064^{(2014.01)}$
$B23K\ 26/08^{(2014.01)}$      $B23K\ 26/38^{(2014.01)}$

(52) Gemeinsame Patentklassifikation (CPC):
**B23K 26/38; B23K 26/046; B23K 26/064;**
**B23K 26/083**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **22.07.2024 DE 102024120733**

(71) Anmelder: **Robust AO GmbH**
**07745 Jena (DE)**

(72) Erfinder: **ULRICH, Stefan**
**18528 Bergen auf Rügen (DE)**

(74) Vertreter: **Szynka Smorodin**
**Patentanwälte Partnerschaft mbB**
**Zielstattstraße 38**
**81379 München (DE)**

(54) **VERFAHREN ZUM SCHNEIDEN EINES WERKSTÜCKS MIT EINEM LASERSTRAHL**

(57) Die Erfindung betrifft ein Verfahren zum Schneiden eines flächigen Werkstücks mit einem Laserstrahl, wobei während eines Relativversetzens von Werkstück und Laserstrahl eine Fokuslage des Laserstrahls oszilliert wird, und wobei die Laserquelle (110) eine Strahlqualität $M^2$ von höchstens 12 hat, $M^2 \le 12$.

Fig. 2

**Beschreibung**

Die vorliegende Erfindung betrifft ein Verfahren zum Schneiden eines flächigen Werkstücks mit einem Laserstrahl.

Beim Schneiden fällt der Laserstrahl auf eine Seite des Werkstücks, die vorliegend als Oberseite betrachtet wird. Dieser liegt eine Unterseite des Werkstücks in einer Dickenrichtung z entgegengesetzt, in der Dickenrichtung z genommen hat das Werkstück die Dicke t. Zum Schneiden, also bspw. Konfektionieren bzw. Auftrennen des Werkstücks entlang einer Linie, werden das Werkstück und der Laserstrahl in einer Vorschubrichtung relativ versetzt (entgegengesetzt bzw. relativ zueinander verschoben). Diese liegt gewinkelt, insbesondere senkrecht, zu der Dickenrichtung z.

Der vorliegenden Erfindung liegt das technische Problem zugrunde, ein vorteilhaftes Verfahren zum Schneiden eines Werkstücks mit einem Laserstrahl anzugeben.

Dies wird mit dem Verfahren gemäß Anspruch 1 gelöst, bei welchem der Laserstrahl über eine Optik, die ein Strahlvariationselement aufweist, auf das Werkstück geführt wird. Dabei wird die Laserquelle so gewählt, dass sie eine Strahlqualität $M^2$ von höchstens 8 hat, also der Laserstrahl vereinfacht gesprochen eine vergleichsweise enge Strahltaille hat. Dies kann einerseits bspw. dahingehend von Vorteil sein, dass höhere Vorschubgeschwindigkeiten möglich werden (die Schnittfuge ist entsprechend schmal). Die Taillierung des Laserstrahls, also vergleichsweise relativ starke Einschnürung, kann jedoch andererseits das Risiko einer Plasmabildung erhöhen, was für den Schneidprozess nachteilig sein kann (siehe unten im Detail).

Deshalb geht der vorliegende Ansatz dahin, zwar einen Laserstrahl mit ausgeprägter Einschnürung, nämlich eine Laserquelle mit $M^2 \leq 12$ vorzusehen, während des Relativversetzens bzw. -vorschubs jedoch die Fokuslage mit zumindest einem Anteil in der Dickenrichtung z zu oszillieren. Im Vergleich zu dem statischen Laserstrahl wird die Einschnürung bzw. der Durchmesser im Gleichwert der Fokuslage damit verbreitert, was eine stabilere und verbesserte Prozessführung erlaubt. In anderen Worten erlaubt die Oszillation trotz des erhöhten Vorschubs eine stabile Prozessführung, wird also ein Prozessfenster vergrößert. Die Strahlqualität ergibt sich zu

$$M^2 = \frac{\pi w_0 \theta}{2 \cdot \lambda},$$

Wobei $w_0$ die Strahltaille, also der halbe Strahldurchmesser im Fokus, des statischen Laserstrahls ist. $\theta$ entspricht dem Divergenzwinkel und $\lambda$ der Wellenlänge des Laserstrahls. Weitere bevorzugte Obergrenzen von $M^2$ können bspw. bei 10, 8, 7, 6, 5, 4, 3 bzw. 2 liegen, eine mögliche Untergrenze z. B. bei 1.

Weitere bevorzugte Ausgestaltungen des erfindungsgemäßen Verfahrens und einer entsprechenden Vorrichtung finden sich in den Ansprüchen und gesamten Offenbarung. Dabei wird nicht immer im Einzelnen zwischen den unterschiedlichen Anspruchskategorien unterschieden, die Offenbarung richtet sich jedenfalls implizit stets sowohl auf Verfahrens- als auch auf Vorrichtungs- bzw. Verwendungsaspekte.

Gemäß einer bevorzugten Ausführungsform wird die Fokuslage solchermaßen oszilliert, dass ein resultierender Durchmesser im Fokus mindestens 5 %, weiter und besonders bevorzugt mindestens 10 % bzw. mindestens 20 %, größer als der Durchmesser im Fokus des statischen Laserstrahls ist (desselben Laserstrahls ohne Oszillation). Mögliche Obergrenzen können bspw. bei 300 %, 200 %, 150 % bzw. 100 % liegen. Im Einzelnen wird beim oszillierten Strahl der Durchmesser dort genommen, wo der Gleichwert (Offset) der oszillierten Fokuslage liegt, der sich durch Mittelung im Zeitverlauf ergibt (siehe unten im Detail). Die gewünschte Durchmesservergrößerung lässt sich bspw. durch eine Anpassung der Amplitude (größere Amplitude → größerer Durchmesser) und/oder veränderte Kaustik und/oder Anpassung des Intensitätsprofils erreichen.

Über die Oszillationsfrequenz kann bspw. die Energiedichteverteilung im Werkstück beeinflusst werden. Hierfür kann z. B. ein nachstehend definierter Überlappungsgrad O betrachtet werden. Die Erfinder haben festgestellt, dass wenn dieser bei mindestens 50 % liegt, von einer konstanten Energiedichteverteilung entlang der Vorschubrichtung ausgegangen werden kann. Der Überlappungsgrad ergibt sich zu

$$O = \left(1 - \frac{v}{2 \cdot w_0 \cdot f}\right) \cdot 100\%$$

wobei $w_0$ die Strahltaille, also der halbe Strahldurchmesser im Fokus, des statischen Laserstrahls ist und $v$ die Vorschubgeschwindigkeit und $f$ die Oszillationsfrequenz sind.

Gemäß einer bevorzugten Ausführungsform wird die Fokuslage mit einer Amplitude oszilliert, die höchstens der Werkstückdicke entspricht. Eine weitere Obergrenze kann bei höchstens der 0,5-fachen Werkstückdicke liegen, und davon unabhängig eine mögliche Untergrenze bei mindestens der 0,3-fachen Werkstückdicke. Entlang der Vorschubrichtung kann die Dicke des Werkstücks variieren, wobei dann bevorzugt auch die Amplitude der z-Oszillation angepasst werden kann. Ist die Dicke des Werkstücks entlang der Vorschubrichtung konstant, so kann die Amplitude bspw. im Vergleich zu einem weiteren Werkstück verändert werden, welches eine andere Dicke hat.

Gemäß einer bevorzugten Ausführungsform wird die Fokuslage beim Schneiden einer Dicke t mit einer ersten Amplitude oszilliert, wobei die Fokuslage beim Schneiden einer im Vergleich dazu größeren Dicke mit einer zweiten Amplitude oszilliert wird, die größer als die erste Amplitude ist. Wie eben diskutiert, können die unterschiedlichen Dicken an unterschiedlichen Stellen desselben Werkstücks auftreten und/oder kann die Amplitude von Werkstück zu Werkstück angepasst werden, wenn diese eine unterschiedliche Dicke haben. Bei einer geringeren Dicke kann mit einer dritten Amplitude oszilliert werden, die kleiner als die erste Amplitude ist. Generell können sich die Amplituden, also die zweite von der ersten und ggf. die dritte von der ersten, bspw. um dem Betrag nach mindestens 10 %, 20 % oder 30 % unterscheiden, mit möglichen Obergrenzen bei z. B. höchstens 500 %, 400 %, 300 % bzw. 200 %.

Gemäß einer bevorzugten Ausführungsform erfolgt der Relativversatz beim Schneiden zu ersten Zeitpunkten bzw. in einem ersten Zeitintervall mit einer ersten Vorschubgeschwindigkeit $v_1$. Die Fokuslage wird hierbei mit einer ersten Frequenz oszilliert. Zum zweiten Zeitpunkt bzw. in einem zweiten Zeitintervall erfolgt der Relativversatz mit einer zweiten Vorschubgeschwindigkeit $v_2$, die größer als die erste Vorschubgeschwindigkeit $v_1$ ist. Die Fokuslage wird hierbei mit einer zweiten Frequenz oszilliert, die größer als die erste Frequenz ist. Die Frequenzen können sich hierbei bspw. um mindestens 10%, 20% oder 30% unterscheiden (mit möglichen Obergrenzen bei z. B. höchstens 500 %, 400 %, 300 % bzw. 200 %).

Gemäß einer bevorzugten Ausführungsform wird die Fokuslage solchermaßen oszilliert, dass ein entlang der Dickenrichtung z genommenes Intensitätsprofil Iz des Laserstrahls um den Gleichwert der Fokuslage verbreitert ist (im Zeitverlauf, also bei einer zeitlich gemittelten Betrachtung), also in Dickenrichtung z breiter als die Intensitätsverteilung im statischen Fall ist (desselben Laserstrahls ohne Oszillation). Das Intensitätsprofil im statischen Fall kann insbesondere gaußförmig sein, demgegenüber ist die Intensitätsverteilung Iz entlang des oszillierten Laserstrahls verbreitert. Es kann also bspw. bei jenen z-Werten, bei welchen eine Halbwertsbreite des Gauß-Profils genommen wird, eine Intensität des oszillierten Laserstrahls größer als im statischen Fall sein.

In bevorzugter Ausgestaltung ist das Intensitätsprofil Iz des oszillierten Laserstrahls ein Top-Hat-Profil (im Zeitverlauf, also bei einer zeitlich gemittelten Betrachtung). Das Intensitätsprofil Iz kann bspw. auch eine Ringform haben, etwa mit einem Minimum in Mitte (Donut-Profil); alternativ kann in der Mitte der Ringform aber auch eine Maximum liegen. In anderen Worten kann bei einigen Ausführungsformen die Intensität beim Gleichwert der Fokuslage gleich oder sogar kleiner als bei z-Werten um den Gleichwert der Fokuslage sein. Bildlich gesprochen kann sich mit einem solchen Intensitätsprofil über die Dickenrichtung z ein gleichmäßiger Intensitäts- bzw. Energieeintrag in das Werkstück realisieren lassen.

Gemäß einer bevorzugten Ausführungsform wird ein Gleichwert, also Offset, der Fokuslage so eingestellt, dass er außerhalb der oberen Hälfte der Dicke t des Werkstücks liegt. Diese Variante kann auch unabhängig von der hauptanspruchsgegenständlichen Laserquelle mit $M^2 \leq 8$ von Interesse uns soll entsprechend offenbart sein, bevorzugt ist gleichwohl eine Kombination damit.

Generell wird beim Schneiden mit einem Laserstrahl, bspw. beim Schmelzschneiden, die Energie des Laserstrahls bzw. die absorbierte Laserstrahlung zum Aufschmelzen bzw. partiellen Verdampfen des Materials des Werkstücks genutzt. Eine Arbeitshypothese der Erfinder geht dahin, dass sich hierbei die Schnittfront mit zunehmender Schnittgeschwindigkeit stärker neigt, was bspw. den Anteil der absorbierten Strahlung erhöht (z. B. wegen eines größeren Überlappungsgrads von Laserstrahl und Schnittfront bzw. wegen eines winkelabhängigen Absorptionsgrads). Im Ergebnis kann dies bspw. zu einer Temperaturerhöhung im Bereich der Schnittfront führen, was den Anteil an verdampftem Material erhöhen und bspw. zu einer unkontrollierten Plasmabildung führen kann.

Dies kann der Laserstrahlung einerseits Energie entziehen, andererseits kann es aufgrund der Plasmabildung zu einer Defokussierung bzw. Strahlablenkung kommen. Generell kann die Plasmabildung den Schneidprozess stören bzw. sogar zum Schnittabriss führen, beides ist unerwünscht, die veränderte Energieeinkopplung kann bspw. die Schnittfronttemperatur absenken und die Beeinflussung der gasdynamischen Vorgänge können den Schmelzaustrieb stören. Durch die Oszillation lässt sich der Plasmabildung vorbeugen bzw. lässt sich die Grenze der Plasmabildung verschieben, wodurch sich bspw. höhere Vorschubgeschwindigkeiten erreichen lassen (was z. B. den Durchsatz erhöhen und wirtschaftlich von Interesse sein kann).

Die Plasmabildung ließe sich zwar auch durch eine Verschiebung des Gleichwerts der Fokuslage, also des Offset, hin zur Oberseite des Werkstücks unterdrücken, hierbei haben die Erfinder jedoch eine erhöhte Gratbildung an der Unterseite des Werkstücks beobachtet. In der Gesamtschau kann der vorliegende Ansatz, nämlich die Kombination aus Oszillation und Offsetlage (außerhalb der oberen Hälfte der Dicke t), eine Erhöhung der Vorschubgeschwindigkeit bei zugleich sauberer Schnittausbildung ermöglichen.

Das "flächige" Werkstück hat in der Dickenrichtung z eine um ein Vielfaches kleinere Erstreckung als in seinen dazu gewinkelten bzw. senkrechten Flächenrichtungen, es kann sich bspw. um eine Metallplatte bzw. ein Blech oder einen Metallrohling handeln, beispielsweise ein Gehäuse- oder Karosserieteil. Generell ist der Werkstoff bspw. ein Metall, was selbstverständlich auch Legierungen umfassen kann. Die Dicke t wird jeweils dort betrachtet, wo der Laserstrahl in einem jeweiligen Zeitpunkt der Bearbeitung auf die Oberseite fällt, wo also die Schnittfront liegt. Die Dickenrichtung z steht senkrecht zur Oberseite. Im Allgemeinen muss das Werkstück keine einheitliche Dicke haben, kann die Dicke entlang der Vorschubrichtung also verschiedene Werte annehmen. Bevorzugt kann gleichwohl eine einheitliche Dicke sein, insbesondere kann es sich bei dem Werkstück um eine planparallele Platte handeln.

Zur Illustration kann die Dicke t bspw. bei mindestens 0,5 mm liegen, typischerweise mindestens im Bereich mehrerer Millimeter. Mögliche Obergrenzen der Dicke t können im Bereich von Zentimetern liegen, bspw. bei höchstens 50 cm, - 10 cm, 6 cm oder 4 cm. Prinzipiell erhöht sich das Risiko der Plasmabildung mit der Materialdicke und auch mit der Schnittgeschwindigkeit, also der Vorschubgeschwindigkeit. Dieser Relativversatz von Werkstück und Laserstrahl kann, jeweils in einem ortsfesten Koordinatensystem betrachtet, durch Versetzen des Laserstrahls und/oder des Werkstücks erfolgen, kann das Werkstück also bspw. unter dem Laserstrahl durchgeschoben werden).

Die Fokuslage ist jene z-Position entlang der Strahlrichtung, an welcher der Laserstrahl in einem jeweiligen Zeitpunkt seinen Fokus hat, also in anderen Worten die Position der Strahltaille in einem jeweiligen Moment. Der Gleichwert (Offset) der Fokuslage ergibt sich dann als Mittelwert, also durch Mittelung im Zeitverlauf. Zur Illustration, die Fokuslage kann in z-Richtung zwischen einem Minimum und einem Maximum oszillieren (das Minimum ergibt sich als kleinster und das Maximum als größter Abstand der Fokuslage zur Fokussieroptik des Bearbeitungskopfes, jeweils entlang des Strahls genommen), wobei der Gleichwert dann dazwischen liegt, bspw. mittig liegen kann (aber im Allgemeinen nicht muss). In anderen Worten, der Offset kann einer statischen Fokuslage entsprechen, wobei die dynamische Fokuslage mit der Oszillation um diesen Gleichwert oszilliert. In nochmals anderen Worten kann der Gleichwert der Fokuslage dort liegen, wo der Fokus ohne die z-Oszillation, also bei ausgeschalteter z-Oszillation läge.

Bei der Oszillation kann die Fokuslage z. B. auch in die oder durch die obere Hälfte der Dicke t wandern, der Mittelwert (Gleichwert) soll aber außerhalb davon liegen. Im Allgemeinen kann der Gleichwert der Fokuslage bspw. auch oberhalb der Oberseite liegen, also außerhalb des Werkstücks. Bezogen auf eine nachstehend diskutierte Prozentbemaßung (0 % an Unterseite /100 % an Oberseite) kann der Gleichwert der Fokuslage also auch bei einem Wert größer 100 % liegen. In diesem Fall kann zwar die Plasmabildung weniger relevant sein, kann die Strahloszillation aber bspw. ein Risiko von Self-Burning und Schnittabriss reduzieren.

Gemäß einer bevorzugten Ausführungsform liegt der Gleichwert der Fokuslage bezogen auf eine Prozentbemaßung der Dicke t unterhalb von 50 %. Hierbei beträgt die Prozentbemaßung per Definition 0 % an der Unterseite des Werkstücks und nimmt sie über die Dicke t des Werkstücks von der Unterseite zu der Oberseite hin zu, wobei die 100 % in der Oberseite des Werkstücks liegen. Bevorzugt liegt der Gleichwert bei höchstens 40 %, ist er also bezogen auf eine Mitte der Dicke um mindestens 10 % nach unten versetzt.

Im Allgemeinen kann der Gleichwert der Fokuslage auch unterhalb des Werkstücks liegen, also unterhalb der Unterseite (bezogen auf die Prozentbemaßung bei einem negativen Prozentwert). In bevorzugter Ausgestaltung liegt der Gleichwert der Fokuslage hingegen bei mindestens 0 %, also in der Unterseite oder darüber (aber außerhalb der oberen Hälfte). Besonders bevorzugt liegt er bei mindestens 10 %. In Zusammenschau mit dem vorstehenden Absatz kann der Gleichwert der Fokuslage somit bspw. in einem Bereich 0 % - 50 %, insbesondere 10 % - 40 %, der Prozentbemaßung liegen.

Gemäß einer bevorzugten Ausführungsform liegt eine Frequenz, mit welcher die Fokuslage in Dickenrichtung z oszilliert, bei mindestens 500 Hz, vorzugsweise mindestens 750 Hz. Mit der hochfrequenten Oszillation kann bspw. eine dynamische Anpassung der Strahlform (im besonderen der Strahlkaustik) und Intensitätsverteilung erreicht werden. Alternativ zu oder in Kombination mit einer eben genannten Untergrenze kann eine bevorzugte Obergrenze bspw. bei 5 kHz liegen, weiter und besonders bevorzugt bei höchstens 4 kHz bzw. höchstens 3 kHz. Generell soll die Bezugnahme auf eine "Frequenz" nicht zwingend eine Oszillation bei einer einzigen Frequenz implizieren, sondern kann auch die Frequenz variiert werden (bevorzugt innerhalb eines Intervalls mit den eben genannten Unter-/Obergrenzen). Der Begriff "Frequenz" muss ferner auch keine Sinusform implizieren, auch wenn dies bevorzugt sein kann, im Allgemeinen ist bspw. auch Sägezahnprofil o.ä. möglich.

Eine bevorzugte Ausgestaltung richtet sich auf die Amplitude, mit welcher die Fokuslage in der Dickenrichtung z oszilliert wird. Die Amplitude wird hierbei anhand der statischen Rayleighlänge $z_R$ angegeben, die sich als die Distanz entlang der optischen Achse ergibt, die der statische Laserstrahl (ohne Oszillation in z) braucht, bis sich ausgehend von der Strahltaille seine Querschnittsfläche verdoppelt. Bezogen auf die Rayleighlänge $z_R$ liegt die Amplitude der Oszillation bei mindestens der 0,1-Fachen Rayleighlänge $z_R$, weitere Untergrenzen können bei mindestens dem 0,25- , 0,5-, 0,75- oder 1-Fachen der Rayleighlänge $z_R$ liegen. Alternativ dazu oder in Kombination damit kann eine Obergrenze bspw. bei höchstens der achtfachen, sechsfachen, vierfachen, dreifachen oder zweifachen Rayleighlänge $z_R$ liegen.

Gemäß einer bevorzugter Ausführungsform liegt im statischen Fall, also bei dem Laserstrahl ohne Oszillation, ein Durchmesser des Laserstrahls im Fokus, also die Strahltaille, bei mindestens 10 µm, weiter bevorzugt mindestens 18 µm, 30 µm bzw. mindestens 50 µm und 100 µm. Bevorzugte Obergrenzen können bei in der Reihenfolge der Nennung zunehmend bevorzugt höchstens 350 µm, 250 µm, 200 µm bzw. 150 µm liegen.

In bevorzugter Ausgestaltung wird der Laserstrahl ausschließlich in der Dickenrichtung z oszilliert, gibt es also bspw. keine Oszillation in der Vorschubrichtung oder quer zur Vorschubrichtung (kein Strahlpendeln). Damit kann sich bspw. die Prozesskontrolle erhöhen lassen und die die technische Implementierung der Oszillation vereinfachen lassen.

Die Variation der Fokuslage kann allgemein über ein Strahlvariationselement erfolgen, wobei dieses prinzipiell auch transmissiv vorgesehen sein kann. In bevorzugter Ausgestaltung handelt es sich dabei jedoch um einen deformierbaren Reflektor, also einen Reflektor mit deformierbarer Reflexionsfläche. Hinsichtlich einer möglichen Ausgestaltung wird exemplarisch verwiesen auf ein Spiegeldesign gemäß DE 10 2021 102 096 B4, das mit entsprechender Ansteuerung bzw. Regelung oszillierend betrieben werden kann (kommerziell verfügbar als *Zwobbel* der ROBUST AO GmbH). Die Oszillation wird dann also bspw. durch eine entsprechend oszillierende Deformation der Reflexionsfläche aufgeprägt. Mit einem Fokussiersystem, bspw. einer Fokussierlinse bzw. einem Fokussier-Linsensystem, kann der Laserstrahl fokussiert werden. Das Strahlvariationselement, insbesondere der deformierbare Reflektor, kann bezogen auf die Strahlausbreitung dem Fokussiersystem vor- oder nachgelagert angeordnet sein.

Gemäß einer bevorzugten Ausführungsform wird die Fokuslage mit einer asymmetrischen Signalform oszilliert. In anderen Worten hat die Signalform einen Tastgrad, der ungleich 50 % ist. Bildlich gesprochen kann durch den vom Mittelwert abweichenden Tastgrad die Intensitätsverteilung mehr auf die eine oder andere Seite des Gleichwerts der Fokuslage verschoben werden. Bevorzugt kann der Tastgrad so eingestellt werden, dass die Energiedichteverteilung zur Oberseite des Werkstücks hin verschoben ist; in anderen Worten kann die Energiedichte oberhalb des Gleichwerts der Fokuslage damit höher als unterhalb des Gleichwerts der Fokuslage sein.

Die Erfindung betrifft auch eine Vorrichtung zum Schneiden eines flächigen Werkstücks mit einem Laserstrahl, wobei diese Vorrichtung eine Laserquelle, eine Werkstückaufnahme zum Anordnen des Werkstücks und eine Optik aufweist. Gemäß einer bevorzugten Variante hat die Laserquelle ein $M^2$ von höchstens 8, vgl. die Offenbarung eingangs, auch bzgl. weiterer Ober- und Untergrenzen. Die Optik weist dabei ein Strahlvariationselement auf, mit dem sich die Fokuslage des Laserstahls entlang der Ausbreitungsrichtung und damit bezogen auf das Bauteil in Tiefenrichtung variieren bzw. formen lässt (siehe vorne).

Bei der Laserquelle kann es sich z. B. um einen Hochleistungslaser handeln, bspw. um einen Faser-, Scheiben-, Dioden- oder $CO_2$-Laser. Die Wellenlänge der Laserstrahlung kann z. B. im UV- bis MIR-Bereich liegen. Die Optik führt den im Betrieb von der Laserquelle emittierten Laserstrahl auf das Werkstück, also zu der für die Aufnahme des Werkstücks vorgesehenen Werkstückaufnahme.

Das Strahlvariationselement ist dazu eingerichtet, die Fokuslage des Laserstrahls zu oszillieren. Gemäß einer bevorzugten Ausführungsform ist es dabei dazu eingerichtet, den Gleichwert der Fokuslage außerhalb einer oberen Hälfte des Werkstücks zu halten. Ein solches Eingerichtet-Sein kann bspw. dahingehen, dass in einer Steuereinheit (z. B. Maschinensteuerung) der Vorrichtung bzw. des Strahlvariationselements Befehle hinterlegt sind, welche das Strahlvariationselement dazu veranlassen, dem im Betrieb darüber geführten Laserstrahl die Oszillation aufzuprägen und dabei den Offset außerhalb der oberen Hälfte des Werkstücks zu halten. Offenbart sein soll ferner eine solche Vorrichtung mit Laserquelle, Werkstückaufnahme und Optik, wobei in der Werkstückaufnahme ein Werkstück der Dicke t angeordnet ist.

Ferner betrifft die Erfindung die Verwendung einer Vorrichtung mit Laserquelle, Werkstückaufnahme und Optik zum Schneiden eines Werkstücks. Hierbei wird beim Schneiden die Fokuslage oszilliert und liegt der Gleichwert der Fokuslage bevorzugt außerhalb der oberen Hälfte der Dicke t des Werkstücks, siehe vorne bzgl. weiterer Details.

Teile der Erfindung lassen sich auch in Form der folgenden Aspekte zusammenfassen:

　　1. Verfahren zum Schneiden eines flächigen Werkstücks (10) mit einem Laserstrahl (20), bei welchem der Laserstrahl (20) von einer Laserquelle (110) emittiert wird und über eine Optik (120) auf das Werkstück (10) geführt wird, wobei das Werkstück (10) und der Laserstrahl (20) zum Schneiden in einer Vorschubrichtung (25) relativ zueinander versetzt werden,

　　　　und wobei die Optik (120) ein Strahlvariationselement (125) aufweist, mit dem während des Relativversetzens eine Fokuslage (21) des Laserstrahls (20) mit zumindest einem Anteil in einer zu der Vorschubrichtung senkrechten Dickenrichtung z des Werkstücks (10) oszilliert wird,
　　　　und wobei die Laserquelle (110) eine Strahlqualität $M^2$ von höchstens 12 hat, $M^2 \leq 12$.

　　2. Verfahren nach dem vorstehenden Aspekt, bei welchem eine Frequenz f der Oszillation in Abhängigkeit von einer Vorschubgeschwindigkeit v so eingestellt wird, dass ein Überlappungsgrad

$$O = \left(1 - \frac{v}{2 \cdot w_0 \cdot f}\right) \cdot 100\%$$

mindestens 50 % beträgt.

　　3. Verfahren nach Aspekt 1 oder 2, bei welchem das Werkstück (10) eine Dicke t hat und die Fokuslage (21) mit einer ersten Amplitude oszilliert wird, die höchstens der zweifachen Werkstückdicke t entspricht.

4. Verfahren nach einem der vorstehenden Aspekte, bei welchem das Werkstück (10) eine Dicke t hat und die Fokuslage (21) mit einer ersten Amplitude oszilliert wird, wobei die Fokuslage (21) beim Schneiden einer im Vergleich zur Dicke t größeren Dicke mit einer zweiten Amplitude oszilliert wird, die größer als die erste Amplitude ist.

5. Verfahren nach einem der vorstehenden Aspekte, bei welchem, wenn der Relativversatz in der Vorschubrichtung (25) mit einer ersten Vorschubgeschwindigkeit $v_1$ erfolgt, die Fokuslage (21) mit einer ersten Frequenz oszilliert wird, wobei wenn der Relativversatz in der Vorschubrichtung (25) mit einer zweiten Vorschubgeschwindigkeit $v_2$ erfolgt, die größer als die erste Vorschubgeschwindigkeit $v_1$ ist, die Fokuslage (21) mit einer zweiten Frequenz oszilliert wird, die größer als die erste Frequenz ist.

6. Verfahren nach einem der vorstehenden Aspekte, bei welchem die Fokuslage (21) des Laserstrahls (20) solchermaßen mit zumindest dem Anteil in der Dickenrichtung z oszilliert wird, dass in einem Gleichwert (22) der Fokuslage (21) ein Durchmesser d des Laserstrahls (20) um mindestens 5 % größer ist als ein Durchmesser des statischen Laserstrahls (20) im Fokus.

7. Verfahren nach einem der vorstehenden Aspekte, bei welchem die Fokuslage (21) des Laserstrahls (20) solchermaßen mit zumindest dem Anteil in der Dickenrichtung z oszilliert wird, dass ein entlang der Dickenrichtung z genommenes Intensitätsprofil $I_z$ des Laserstrahls (20) um einen Gleichwert (22) der Fokuslage (21) breiter ist als ein Intensitätsprofil des statischen Laserstrahls (20).

8. Verfahren nach Aspekt 7, bei welchem das entlang der Dickenrichtung z genommene Intensitätsprofil $I_z$ des Laserstrahls (20) um den Gleichwert (22) der Fokuslage (21) ein Top-Hat-ähnliches Profil oder ein Profil hat, das einen Ring aufweist, bspw. ein Donut-ähnliches Profil.

9. Verfahren nach einem der vorstehenden Aspekte, bei welchem der Laserstrahl (20) auf eine Oberseite (10.1) des Werkstücks (10) fällt, die einer Unterseite (10.2) des Werkstücks (10) in der Dickenrichtung z entgegengesetzt liegt, wobei bezogen auf eine von der Unterseite (10.2) zu der Oberseite (10.1) des Werkstücks (10) genommene Dicke t des Werkstücks (10) ein Gleichwert (22) der Fokuslage (21) außerhalb der oberen Hälfte $t_1$ der Dicke t liegt.

10. Verfahren nach Aspekt 5, bei welchem der Gleichwert (22) der Fokuslage (21) oberhalb des Werkstücks (10) liegt.

11. Verfahren nach Aspekt 5, bei welchem der Gleichwert (22) der Fokuslage (21) bezogen auf eine Prozentbemaßung der Dicke t, die von 0 % an der Unterseite (10.2) bis 100 % an der Oberseite (10.1) des Werkstücks (10) reicht, unterhalb von 50 % liegt.

12. Verfahren nach Aspekt 11, bei welchem der Gleichwert (22) der Fokuslage (21) bei höchstens 40 % liegt.

13. Verfahren nach Aspekt 11 oder 12, bei welchem der Gleichwert (22) der Fokuslage (21) unterhalb des Werkstücks (10) liegt, also unterhalb von 0 %.

14. Verfahren nach Aspekt 12 oder 13, bei welchem der Gleichwert (22) der Fokuslage (21) bei mindestens 0 % liegt.

15. Verfahren nach Aspekt 14, bei welchem der Gleichwert (22) der Fokuslage (21) bei mindestens 10 % liegt.

16. Verfahren nach einem der vorstehenden Aspekte, bei welchem eine Frequenz f der Oszillation bei mindestens 500 Hz und/oder höchstens 5 kHz liegt.

17. Verfahren nach einem der vorstehenden Aspekte, bei welchem eine Amplitude der Oszillation bei mindestens der halben und/oder höchstens der achtfachen Rayleighlänge des statischen Laserstrahls (20) liegt.

18. Verfahren nach einem der vorstehenden Aspekte, bei welchem ein Durchmesser des statischen Laserstrahls (20) im Fokus bei mindestens 10 $\mu$m und/oder höchstens 350 $\mu$m liegt.

19. Verfahren nach einem der vorstehenden Aspekte, bei welcher der Laserstrahl (20) ausschließlich in der Dickenrichtung z oszilliert wird.

20. Verfahren nach einem der vorstehenden Aspekte, bei welchem das Strahlvariationselement (125) einen deformierbaren Reflektor (126) aufweist, über den der Laserstrahl (20) auf das Werkstück (10) geführt wird, wobei die Oszillation dem Laserstrahl (20) mit dem deformierbaren Reflektor (126) aufgeprägt wird.

21. Verfahren nach einem der vorstehenden Aspekte, bei welchem eine Signalform, mit welcher die Fokuslage (21) in der Dickenrichtung z des Werkstücks (10) oszilliert wird, asymmetrisch ist, also ein Tastgrad $\neq$ 50 % ist.

22. Vorrichtung (100) zum Schneiden eines flächigen Werkstücks (10) mit einem Laserstrahl (20), mit einer Laserquelle (110) zur Emission des Laserstrahls (20); einer Werkstückaufnahme, die zum Anordnen des Werkstücks (10) eingerichtet ist, einer Optik (120) zum Führen des Laserstrahls (20) auf eine Oberseite (10.1) des in der Werkzeugaufnahme angeordneten Werkstücks (10), wobei die Laserquelle (110) eine Strahlqualität $M^2$ von höchstens 12 hat, $M^2 \leq 12$, wobei die Optik (120) ein Strahlvariationselement (125) aufweist, mit dem eine Fokuslage (21) des Laserstrahls (20) variierbar ist, und wobei das Strahlvariationselement (125) dazu eingerichtet ist, bei einem Relativversetzen von Werkstück (10) und Laserstrahl (20) die Fokuslage (21) des Laserstrahls (20) mit zumindest einem Anteil in einer Dickenrichtung z zu oszillieren.

23. Vorrichtung (100) zum Schneiden eines flächigen Werkstücks (10) mit einem Laserstrahl (20), mit einer Laserquelle (110) zur Emission des Laserstrahls (20); einer Werkstückaufnahme, die zum Anordnen des Werkstücks (10) mit einer Dicke t eingerichtet ist, einer Optik (120) zum Führen des Laserstrahls (20) auf eine Oberseite (10.1) des in der Werkzeugaufnahme angeordneten Werkstücks (10), wobei die Optik (120) ein Strahlvariationselement (125) aufweist, mit dem eine Fokuslage (21) des Laserstrahls (20) variierbar ist, und wobei das Strahlvariationselement (125) dazu eingerichtet ist, bei einem Relativversetzen von Werkstück (10) und Laserstrahl (20) die Fokuslage (21) des Laserstrahls (20) mit zumindest einem Anteil in einer Dickenrichtung z zu oszillieren, und dabei einen Gleichwert (22) der Fokuslage (21) außerhalb einer oberen Hälfte $t_1$ der Dicke t zu halten.

24. Verwendung einer Vorrichtung (100) nach Aspekt 22 oder 23 zum Schneiden eines Werkstücks (10), insbesondere in einem Verfahren nach einem der Aspekte 1 bis 21.

25. Verwendung einer Vorrichtung (100) nach Aspekt 22 oder 23, wobei in Abhängigkeit von einer Dicke t des Werkstücks eine Amplitude der Oszillation eingestellt wird und/oder in Abhängigkeit von einer Schnittgeschwindigkeit eine Frequenz f der Oszillation eingestellt wird.

**Kurze Beschreibung der Zeichnungen**

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.

Figur 1a,b    illustrieren, wie sich eine Schnittfront eines Laserstrahls mit zunehmender Vorschubgeschwindigkeit zunehmend neigt;

Figur 2        zeigt eine Vorrichtung zum Laserstrahlschneiden und illustriert eine Oszillation der Fokuslage;

Figur 3a,b     zeigen eine Schnittfront und ein Schnittprofil ohne Oszillation der Fokuslage;

Figur 4a,b     zeigen eine Schnittfront und ein Schnittprofil mit Oszillation der Fokuslage;

Figur 5        illustriert einen Durchmesser des Laserstrahls, eingestellt über die Oszillation, sowie zum Vergleich im statischen Fall;

Figur 6        zeigt verschiedene Intensitätsverteilung, eingestellt über die Oszillation, sowie zum Vergleich im statischen Fall.

**Ausführungsbeispiel**

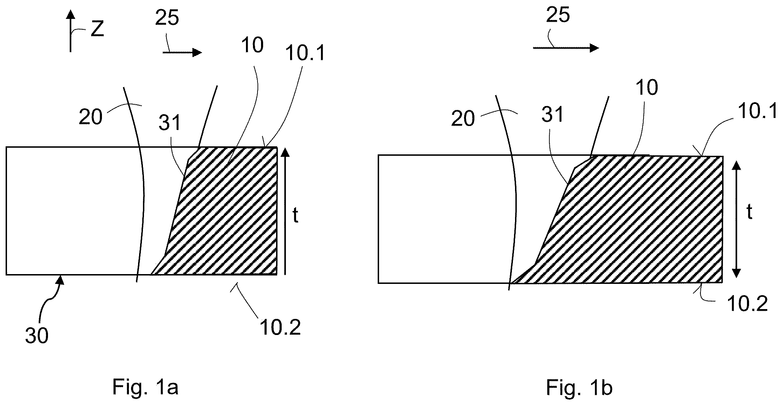

**Figur** 1a zeigt in einer schematischen Schnittansicht ein flächiges Werkstück 10, vorliegend eine Platte, das bzw. die mit einem Laserstrahl 20 geschnitten wird. Dieser fällt auf eine Oberseite 10.1 des Werkstücks 10, in einer Dickenrichtung z entgegengesetzt liegt eine Unterseite 10.2. Durch Relativversetzen von Werkstück 10 und Laserstrahl 20 wird in einer Vorschubrichtung 25 ein Schnitt 30 in das Werkstück 10 eingebracht, in Fig. 1a von links nach rechts. Dabei ist aufgrund des Vorschubs, also des Relativversetzens mit einer Geschwindigkeit $v_1$, eine Schnittfront 31 etwas geneigt.

**Figur 1b** zeigt die gleiche Ausgangssituation mit Werkstück 10 und Laserstrahl 20, wobei in diesem Fall die Vorschubgeschwindigkeit $v_2$ höher ist ($v_1 < v_2$). Die Schnittfront 31 ist wiederum geneigt, und zwar noch stärker als in Fig. 1a. Dies kann bspw. eine Plasmabildung bzw. einen gestörten Schmelzaustrieb zur Folge haben, vgl. die Beschreibungseinleitung im Detail.

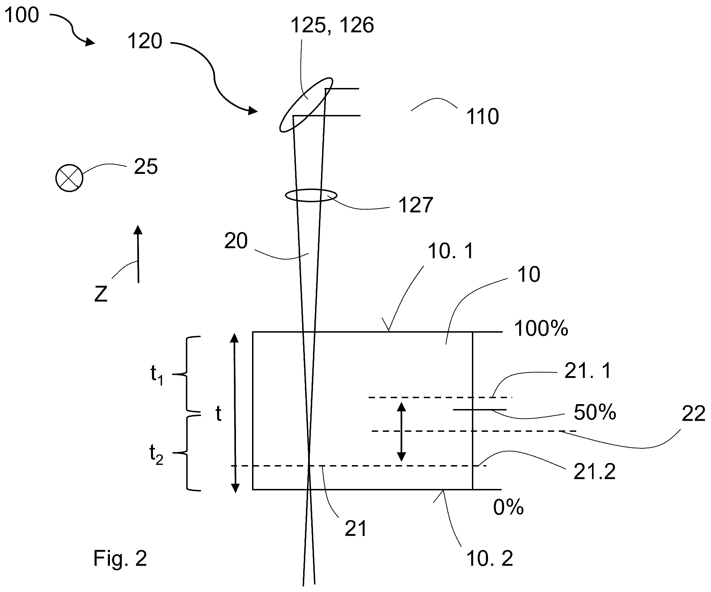

**Figur 2** zeigt wiederum ein flächiges Werkstück 10 in einem schematischen Schnitt und illustriert zunächst, wie eine Fokuslage 21 des Laserstrahls 20 in der Dickenrichtung z oszilliert wird. In der in Figur 2 gezeigten Situation ist die Fokuslage 21 bei einem Minimum 21.2, im Zeitverlauf oszilliert sie zwischen diesem Minimum 21.2 und einem Maximum 21.1. Mit dieser Oszillation, die bspw. bei einer Frequenz von 2-3 kHz erfolgen kann, lässt sich der Plasmabildung auch bei größeren Vorschubgeschwindigkeiten vorbeugen (im Vergleich zum gleichen Vorschub ohne Oszillation). Dabei liegt ein Gleichwert 22 der Fokuslage 21 außerhalb einer oberen Hälfte $t_1$ der Dicke t, nämlich in einer unteren Hälfte $t_2$. Bezogen auf eine Bemaßung mit 0 % an der Unterseite 10.2 und 100 % an der Oberseite 10.1 kann der Offset insbesondere zwischen 10 % und 40 % liegen.

Figur 2 illustriert ferner Details der Vorrichtung 100. Diese weist zunächst die Laserquelle 110 auf, welche im Betrieb den Laserstrahl 20 emittiert. Die Laserquelle 110 hat im vorliegenden Beispiel ein $M^2 \leq 2$. Der Laserstrahl 20 wird über eine Optik 120 auf das Werkstück 10 geführt, wobei diese Optik 120 ein Strahlvariationselement 125 umfasst, welches vorliegend als deformierbarer Reflektor 126 ausgeführt ist. Ferner ist ein Fokussiersystem 127 vorgesehen, welches den Laserstrahl 20 auf das Werkstück 10 bündelt (fokussiert). Die Oszillation der Fokuslage 21 wird dem Laserstrahl 20 mit dem Strahlvariationselement 125 bzw. deformierbaren Spiegel 126 aufgeprägt. Die Vorschubrichtung 25 liegt senkrecht zur Zeichenebene

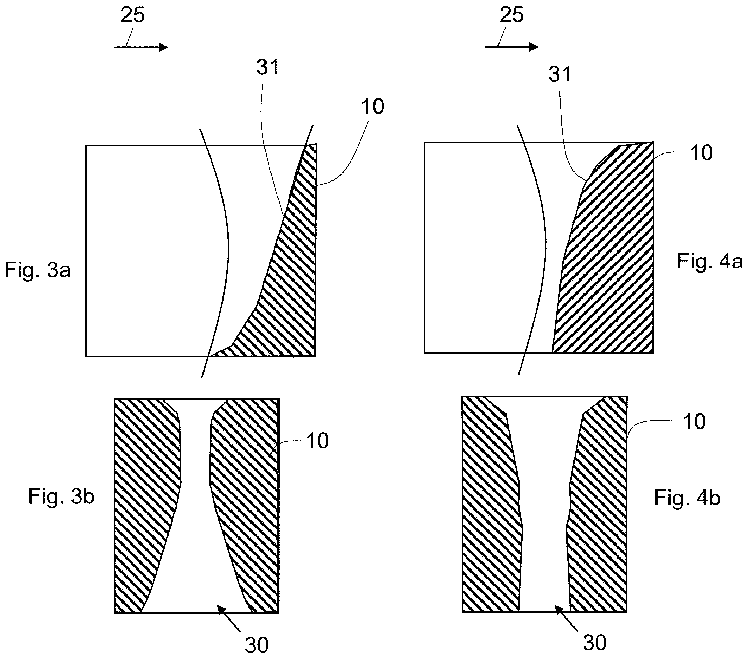

**Figur 3a** illustriert nochmals die Neigung der Schnittfront 31 beim Versetzen in der Vorschubrichtung 25, und zwar ohne eine Oszillation der Fokuslage. **Figur 3b** zeigt den resultierenden Schnitt 30 im Profil, nämlich entlang der Vorschubrichtung in den Schnitt 30 blickend.

**Figur 4a** zeigt zum Vergleich, wie sich die Schnittfront 31 durch die Oszillation verändert, nämlich steiler wird (die Vorschubgeschwindigkeit ist in Figur 3a und 4a gleich groß). Ferner wird, wie am unteren Ende der Schnittfront 31 ersichtlich, auch der Schmelzaustrieb positiv beeinflusst. Das resultierende Profil ist in **Figur 4b** gezeigt, wiederum entlang der Vorschubrichtung in den Schnitt 30 blickend. Es ist weniger stark konturiert, zudem kann durch die vorstehend geschilderte Gleichwertposition, die aufgrund der Oszillation möglich wird, einer Gratbildung vorgebeugt werden.

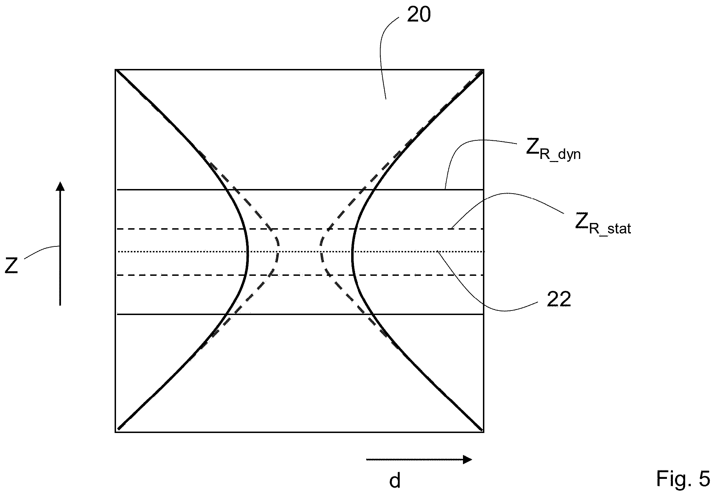

**Figur 5** illustriert einen Durchmesser d (x-Achse) des Laserstrahls 20 entlang der Dickenrichtung z (y-Achse). Dabei gibt die strichlierte Linie den statischen Vergleichsfall wieder, also den Laserstrahl 20 ohne Oszillation. Die Laserquelle (hier nicht dargestellt) hat ein $M^2 \leq 8$, weswegen der Laserstrahl 20 im Fokus vergleichsweise stark eingeschnürt ist. Die durchgezogene Linie illustriert das Profil, das sich aufgrund der Oszillation der Fokuslage ergibt, der Durchmesser d, welcher sich durch Mittelung im Zeitverlauf ergibt, ist insbesondere beim Gleichwert 22 im Vergleich zum statischen Fall vergrößert (und ließe sich durch Erhöhen bzw. Absenken der Amplitude und/oder Frequenz weiter beeinflussen). Ferner nimmt mit der Oszillation auch die Rayleighlänge $z_R$ (welche sich durch Mittelung im Zeitverlauf ergibt) zu, was ebenfalls die Geometrie der Schnittfuge positiv beeinflussen kann.

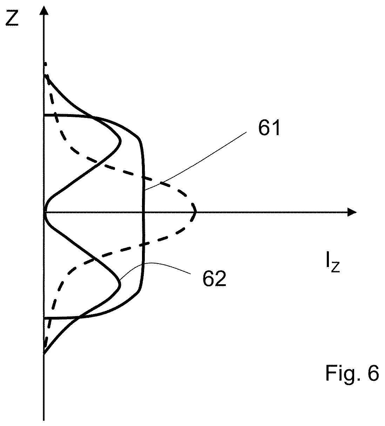

**Figur 6** zeigt Intensitätsprofile $I_z$, also den Intensitätsverlauf über die Dickenrichtung z, über die Mittelung im Zeitverlauf. Im statischen Vergleichsfall, wiedergegeben als strichlierte Linie, ergibt sich ein gaußförmiges Intensitätsprofil. Durch Oszillation der Fokuslage kann ein Top-Hat-Profil 61 eingestellt werden, bei weiterer Erhöhung der Amplitude ergibt sich ein Donut-Profil 62.

**Patentansprüche**

1. Verfahren zum Schneiden eines flächigen Werkstücks (10) mit einem Laserstrahl (20), bei welchem der Laserstrahl (20) von einer Laserquelle (110) emittiert wird und über eine Optik (120) auf das Werkstück (10) geführt wird, wobei das Werkstück (10) und der Laserstrahl (20) zum Schneiden in einer Vorschubrichtung (25) relativ zueinander versetzt werden,

   und wobei die Optik (120) ein Strahlvariationselement (125) aufweist, mit dem während des Relativversetzens eine Fokuslage (21) des Laserstrahls (20) mit zumindest einem Anteil in einer zu der Vorschubrichtung senkrechten Dickenrichtung z des Werkstücks (10) oszilliert wird,
   und wobei die Laserquelle (110) eine Strahlqualität $M^2$ von höchstens 12 hat, $M^2 \leq 12$.

2. Verfahren nach Anspruch 1, bei welchem eine Frequenz f der Oszillation in Abhängigkeit von einer Vorschubgeschwindigkeit v so eingestellt wird, dass ein Überlappungsgrad

$$O = \left(1 - \frac{v}{2 \cdot w_0 \cdot f}\right) \cdot 100\%$$

   mindestens 50 % beträgt.

3. Verfahren nach Anspruch 1 oder 2, bei welchem das Werkstück (10) eine Dicke t hat und die Fokuslage (21) mit einer ersten Amplitude oszilliert wird, die höchstens der Werkstückdicke t entspricht.

4. Verfahren nach einem der vorstehenden Ansprüche, bei welchem das Werkstück (10) eine Dicke t hat und die Fokuslage (21) mit einer ersten Amplitude oszilliert wird, wobei die Fokuslage (21) beim Schneiden einer im Vergleich zur Dicke t größeren Dicke mit einer zweiten Amplitude oszilliert wird, die größer als die erste Amplitude ist.

5. Verfahren nach einem der vorstehenden Ansprüche, bei welchem, wenn der Relativversatz in der Vorschubrichtung (25) mit einer ersten Vorschubgeschwindigkeit $v_1$ erfolgt, die Fokuslage (21) mit einer ersten Frequenz oszilliert wird, wobei, wenn der Relativversatz in der Vorschubrichtung (25) mit einer zweiten Vorschubgeschwindigkeit $v_2$ erfolgt, die größer als die erste Vorschubgeschwindigkeit $v_1$ ist, die Fokuslage (21) mit einer zweiten Frequenz oszilliert wird, die größer als die erste Frequenz ist.

6. Verfahren nach einem der vorstehenden Ansprüche, bei welchem die Fokuslage (21) des Laserstrahls (20) solchermaßen mit zumindest dem Anteil in der Dickenrichtung z oszilliert wird, dass ein entlang der Dickenrichtung z genommenes Intensitätsprofil $I_z$ des Laserstrahls (20) um einen Gleichwert (22) der Fokuslage (21) breiter ist als ein Intensitätsprofil des statischen Laserstrahls (20).

7. Verfahren nach einem der vorstehenden Ansprüche, bei welchem der Laserstrahl (20) auf eine Oberseite (10.1) des Werkstücks (10) fällt, die einer Unterseite (10.2) des Werkstücks (10) in der Dickenrichtung z entgegengesetzt liegt, wobei bezogen auf eine von der Unterseite (10.2) zu der Oberseite (10.1) des Werkstücks (10) genommene Dicke t des Werkstücks (10) ein Gleichwert (22) der Fokuslage (21) außerhalb der oberen Hälfte $t_1$ der Dicke t liegt.

8. Verfahren nach Anspruch 7, bei welchem der Gleichwert (22) der Fokuslage (21) bezogen auf eine Prozentbemaßung der Dicke t, die von 0 % an der Unterseite (10.2) bis 100 % an der Oberseite (10.1) des Werkstücks (10) reicht, unterhalb von 50 % liegt.

9. Verfahren nach einem der vorstehenden Ansprüche, bei welchem eine Frequenz f der Oszillation bei mindestens 500 Hz und/oder höchstens 5 kHz liegt.

10. Verfahren nach einem der vorstehenden Ansprüche, bei welchem eine Amplitude der Oszillation bei mindestens der halben und/oder höchstens der achtfachen Rayleighlänge des statischen Laserstrahls (20) liegt.

11. Verfahren nach einem der vorstehenden Ansprüche, bei welcher der Laserstrahl (20) ausschließlich in der Dickenrichtung z oszilliert wird.

12. Verfahren nach einem der vorstehenden Ansprüche, bei welchem das Strahlvariationselement (125) einen deformierbaren Reflektor (126) aufweist, über den der Laserstrahl (20) auf das Werkstück (10) geführt wird, wobei die Oszillation dem Laserstrahl (20) mit dem deformierbaren Reflektor (126) aufgeprägt wird.

13. Verfahren nach einem der vorstehenden Ansprüche, bei welchem eine Signalform, mit welcher die Fokuslage (21) in der Dickenrichtung z des Werkstücks (10) oszilliert wird, asymmetrisch ist, also ein Tastgrad ≠ 50 % ist.

14. Vorrichtung (100) zum Schneiden eines flächigen Werkstücks (10) mit einem Laserstrahl (20), mit

einer Laserquelle (110) zur Emission des Laserstrahls (20);
einer Werkstückaufnahme, die zum Anordnen des Werkstücks (10) eingerichtet ist;
einer Optik (120) zum Führen des Laserstrahls (20) auf eine Oberseite (10.1) des in der Werkzeugaufnahme angeordneten Werkstücks (10);
wobei die Laserquelle (110) eine Strahlqualität $M^2$ von höchstens 12 hat, $M^2 \leq 12$,
wobei die Optik (120) ein Strahlvariationselement (125) aufweist, mit dem eine Fokuslage (21) des Laserstrahls (20) variierbar ist,
und wobei das Strahlvariationselement (125) dazu eingerichtet ist, bei einem Relativversetzen von Werkstück (10) und Laserstrahl (20) die Fokuslage (21) des Laserstrahls (20) mit zumindest einem Anteil in einer Dickenrichtung z zu oszillieren.

15. Verwendung einer Vorrichtung (100) nach Anspruch 14, wobei in Abhängigkeit von einer Dicke t des Werkstücks eine Amplitude der Oszillation eingestellt wird und/oder in Abhängigkeit von einer Schnittgeschwindigkeit eine Frequenz f der Oszillation eingestellt wird.

Fig. 1a

Fig. 1b

Fig. 2

Fig. 3a

Fig. 3b

Fig. 4a

Fig. 4b

Fig. 5

Fig. 6

Europäisches Patentamt
European Patent Office
Office européen des brevets

# EUROPÄISCHER RECHERCHENBERICHT

Nummer der Anmeldung

EP 25 19 0790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 5 207371 B2 (AMADA CO LTD) 12. Juni 2013 (2013-06-12) | 1,14 | INV. B23K26/046 |
| Y | * Abbildung * * * Absätze [0011] - [0014], [0020], [0034] - [0039], [0041] * ----- | 2-13,15 | B23K26/064 B23K26/08 B23K26/38 |
| X | JP 2002 239769 A (DENSO CORP) 28. August 2002 (2002-08-28) | 1,14 | |
| Y | * Absätze [0002] - [0008], [0011], [0017] - [0021] * * Abbildungen 1,10,11 * ----- | 2,8-13 | |
| X | JP 2000 237885 A (KOIKE SANSO KOGYO KK) 5. September 2000 (2000-09-05) | 1,14 | |
| Y | * Absätze [0002], [0018], [0024], [0030] * ----- | 2,8-13 | |
| X | US 2019/299337 A1 (LEE HO [KR] ET AL) 3. Oktober 2019 (2019-10-03) | 1,14 | |
| Y | * Absätze [0004], [0020], [0054], [0055], [0064], [0072] - [0074] * * Abbildung * * ----- | 2-13,15 | RECHERCHIERTE SACHGEBIETE (IPC) B23K |

Der vorliegende Recherchenbericht wurde für alle Patentansprüche erstellt

| Recherchenort | Abschlußdatum der Recherche | Prüfer |
|---|---|---|
| Berlin | 17. Dezember 2025 | Perret, William |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 0790

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2025

| Im Recherchenbericht angeführtes Patentdokument | | Datum der Veröffentlichung | Mitglied(er) der Patentfamilie | | Datum der Veröffentlichung |
|---|---|---|---|---|---|
| JP 5207371 | B2 | 12-06-2013 | JP | 5207371 B2 | 12-06-2013 |
| | | | JP | 2010036240 A | 18-02-2010 |
| JP 2002239769 | A | 28-08-2002 | KEINE | | |
| JP 2000237885 | A | 05-09-2000 | KEINE | | |
| US 2019299337 | A1 | 03-10-2019 | KR | 20190115158 A | 11-10-2019 |
| | | | US | 2019299337 A1 | 03-10-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021102096 B4